(19) **Europäisches Patentamt**
**European Patent Office**
**Office européen des brevets**

(11) **EP 3 780 588 A1**

(12) **EUROPÄISCHE PATENTANMELDUNG**

(43) Veröffentlichungstag:
**17.02.2021 Patentblatt 2021/07**

(21) Anmeldenummer: **19191696.4**

(22) Anmeldetag: **14.08.2019**

(51) Int Cl.:
*H04N 7/00* [(2011.01)]     *H04N 21/81* [(2011.01)]
*H04N 21/84* [(2011.01)]   *H04N 21/8547* [(2011.01)]
*H04N 21/236* [(2011.01)]  *H04N 21/434* [(2011.01)]
*H04N 7/025* [(2006.01)]

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft**
**80333 München (DE)**

(72) Erfinder: **RIEGEL, Thomas**
**85662 Hohenbrunn (DE)**

(54) **VERFAHREN ZUM ÜBERTRAGEN EINER METAINFORMATION ZU EINEM BILD EINES VIDEOSTROMS**

(57)    Die Erfindung betrifft ein Verfahren zum Übertragen einer Metainformation (14) zu einem Bild (10) eines Videostroms (19). Das Bild (10) wird um mindestens einen Codierblock (13) erweitert. Die Metainformation (14) wird in eine optische Information (11) des mindestens einen Codierblocks (13) übersetzt. Das Bild (10) wird mit dem mindestens einen Codierblock (13) von einer ersten Computer-Einheit (31) zu einer zweiten Computer-Einheit (32) übertragen. Die optische Information (11) des übertragenen mindestens einen Codierblocks (13) wird zu der Metainformation (14) des Bildes (10) decodiert.

FIG 2

**Beschreibung**

Die Erfindung betrifft ein computerimplementiertes Verfahren zum Übertragen einer Metainformation zu einem Bild eines Videostroms. Die Erfindung betrifft zudem eine Vorrichtung zum Übertragen einer Metainformation zu einem Bild eines Videostroms mit einem Prozessor sowie ein Computerprogrammprodukt umfassend Befehle, die bei der Ausführung des Programms das computerimplementierte Verfahren ausführen.

Ein nicht zu vernachlässigender Teil der Kommunikation findet heutzutage unter Verwendung des Internets statt. Aufgrund der zugenommenen Nutzung von Smartphones und Tablets sind viele Menschen regelmäßig mit dem Internet verbunden. Insbesondere wird das Internet auch zur Kommunikation eingesetzt. Dies kann beispielsweise mithilfe allgemein bekannter Kommunikationsdienste wie zum Beispiel Facebook, WhatsApp oder Twitter geschehen.

Eine weitere Kommunikationsmöglichkeit stellt der WebRTC-Standard dar. WebRTC steht für Web Real-Time Communication und wird zur Web-Echtzeitkommunikation eingesetzt. WebRTC ist ein offener Standard, der eine Sammlung von Kommunikationsprotokollen sowie Programmierschnittstellen (API) definiert. Damit kann eine Echtzeitkommunikation über Rechner-Rechner-Verbindungen ermöglicht werden. Insbesondere wird WebRTC für Multimedia-Kommunikationen eingesetzt, welche direkt über einen Webbrowser abgewickelt werden. Mit WebRTC können Anwendungen wie Videokonferenzen, Dateitransfers beziehungsweise Datenübertragung, Chats und Desktop-Sharing realisiert werden. WebRTC wird beim World Wide Web Consortium (W3C) als offener Standard standardisiert.

In einigen Anwendungsfällen besteht das Bedürfnis, zu einem Videosignal frame-genau weitere Zusatzinformationen zu übermitteln. Eine solche Zusatzinformation kann zum Beispiel ein graphisches Overlay sein. Die Erfindung beruht auf der Erkenntnis, dass zwar WebRTC einen Datenkanal für das Videosignal bereitstellt, jedoch leider keine Möglichkeit vorsieht, diesen Datenkanal mit dem Videokanal zu synchronisieren oder zu multiplexen. Somit kann eine Synchronisierung der Zusatzinformation mit dem Videosignal nicht erreicht werden. Derzeit wird der Datenkanal separat und zeitlich unabhängig vom Videokanal realisiert.

Im konkreten Anwendungsfall, wenn von einem ersten Computer mit Hilfe eines ersten Browsers ein Video zu einem zweiten Computer mit einem zweiten Browser übertragen wird, werden das Videosignal und die Daten im Datenkanal separat voneinander übertragen. Für die Datenübertragung beziehungsweise die Übertragung der Videosignale können insbesondere Codierer und Decodierer zum Einsatz kommen.

Das Videosignal enthält typischerweise einen Zeitstempel oder einen Timecode beziehungsweise Presentation-Timestamp als Zusatzinformationen, welche zu einer Synchronisation von Audio/Video/Untertitel verwendet werden. Jedoch werden die Decoder auf Browserseite aus Sicherheitsgründen abgeschlossen in einer Sandbox ausgeführt und das WebRTC Verfahren sieht keine Schnittstelle vor, welche gestatten würde, die Zeitinformation oder Zeitstempel beim Decodieren des Videosignals in die Laufzeitumgebung des Browsers zu übertragen.

Dies bedeutet, dass mittels des WebRTC-Standards zwar Videodaten und Daten mit Zeitinformationen übertragen werden können, dies jedoch separat voneinander geschieht. Die Daten mit Zeitinformationen können als zeitstempelbasierte Zusatzinformationen betrachtet werden. Ein Timecode ist zum Bespiel eine Zeitinformation. Die Zeitinformation kann in Form eines Zeitstempels vorliegen. Somit kann die Zeitinformation als Timecode, Zeitstempel, Datum, Uhrzeit, Presentation-Timestamp etc. vorliegen. Diesen und ähnlichen Begriffen ist gemein, dass sie eine Zeitinformation aufweisen.

Werden diese Videosignale und Daten an dem zweiten Computer im Browser empfangen, so können die zeitstempelbasierten Zusatzinformationen nicht mit dem Videosignal synchronisiert werden, da browserseitig derzeit keine entsprechende Schnittstelle vorgesehen ist, um einem im Videostrom vorhandenen Timecode an die Laufzeitumgebung des Webbrowser weiterzureichen. Die vom World Wide Web Consortiums (W3C) definierten Standards für Webbrowser sehen derzeit eine solche Schnittstelle nicht vor. Somit entsteht die unerwünschte Situation, dass das Videosignal sowie die zeitstempelbasierten Zusatzinformationen übertragen werden können, jedoch auf der Empfängerseite im Webbrowser die Zeitinformationen nicht zum Synchronisieren der übermittelten Zusatzinformationen eingesetzt werden können. So können die Zusatzinformationen nicht frame-genau (bildgenau) dargestellt werden. Die Zusatzinformation kann zum Beispiel ein weiteres Bild sein, welches insbesondere in dem Bild dargestellt werden soll. Das zusätzliche Bild ist zum Beispiel ein Rahmen, ein Pfeil oder ein Symbol wie zum Beispiel ein Fragezeichen oder Ausrufezeichen. Die Zusatzinformation ist zwar oft empfängerseitig vorhanden, jedoch ist nicht bekannt, zu bei welchen Bildern diese Zusatzinformation dargestellt werden soll, da den dargestellten Bildern des Videostroms im Browser die Zeitinformation fehlt. Diese Situation betrifft insbesondere Webbrowser, welche über keine zuvor genannte Schnittstelle verfügen. Dies gilt insbesondere für frisch installierte Webbrowser, an denen keine Veränderungen vorgenommen wurden. Durch eine entsprechende Programmierung des Browsers oder Installation eines zusätzlichen Plug-Ins könnte das Synchronisieren der Zusatzinformation gelingen. Jedoch ist dazu eine Änderung am Browser beziehungsweise Computersystem nötig. Häufig verfügen Mitarbeiter jedoch nicht über die dazu nötigen Administrationsrechte über ihren Computer und können diese Änderungen nicht vornehmen.

Eine Aufgabe der Erfindung kann darin gesehen werden, eine Metainformation zu einem Bild mit dem Bild zu übertragen. Insbesondere soll ergänzend die Metainformation aus dem empfangenen Bild zurückgewonnen werden, um insbesondere eine Zusatzinformation mit dem Bild zu synchronisieren. Dabei soll bevorzugt ein Inhalt des Bildes nicht verändert werden.

Diese Aufgabe wird gemäß den unabhängigen Ansprüchen dieser Anmeldung gelöst. Sinnvolle Weiterbildungen und alternative Ausführungsformen sind in den Unteransprüchen, den Figuren sowie der Beschreibung angegeben.

Die Erfindung sieht ein computerimplementiertes Verfahren zum Übertragen einer Metainformation zu einem Bild eines Videostroms vor. Der Videostrom beinhaltet insbesondere mehrere Bilder. Das Bild kann als digitale Information vorliegen. Jedes Bild kann eine jeweilige Metainformation aufweisen. Die Metainformation kann beispielsweise ein Zeitstempel, ein Datum, eine Uhrzeit, eine Gerätenummer, ein Verfasser oder Autor etc. umfassen. Der Begriff Metainformation kann insbesondere jene Bedeutung haben, welche dem Begriff Metadaten zugeschrieben wird. Das Bild kann insbesondere rechteckig ausgebildet sein.

Die Metainformation kann als Zeitinformation ausgebildet sein. Die Zeitinformation als Metainformation oder Teil der Metainformation kann in Form eines Zeitstempels vorliegen. Die Zeitinformation kann als Timecode, Zeitstempel, Datum, Uhrzeit, Presentation-Timestamp etc. ausgebildet sein. Diesen und ähnlichen Begriffen ist insbesondere gemein, dass sie eine Zeitinformation aufweisen.

Zunächst wird das Bild um mindestens einen Codierblock mit mehreren Pixeln zum optischen Darstellen der Metainformation erweitert. Der mindestens eine Codierblock kann eine Blockzeile sein. Dies bedeutet insbesondere, dass das Bild mit einer zusätzlichen Zeile von mindestens einem Codierblock erweitert wird. Insbesondere wird der mindestens eine Codierblock unmittelbar dem Bild angefügt. Der mindestens eine Codierblock kann zum Beispiel 8x8, 16x16, 32x32 oder 64x64 Pixel umfassen. Mehrere Codierblöcke können eine Blockzeile ergeben. Dem Bild können mehrere Blockzeilen angefügt werden.

In einem weiteren Schritt wird die Metainformation in eine optische Information des mindestens einen Codierblocks übersetzt. Der Begriff "Übersetzen" kann ebenfalls als transformieren oder codieren verstanden werden. Insbesondere kann der mindestens eine Codierblock und/oder der darin enthaltenen Pixel hinsichtlich seiner Intensität, Helligkeit oder Farbton angepasst werden, um die optische Information zu bilden. So kann die Metainformation in Form einer optischen Information dargestellt werden, welche dem Bild angefügt wird. Das Codieren der Metainformation in die optische Information kann beispielsweise mit Hilfe mehrerer Grauwerte, einer Farbverschlüsselung und/oder vorgegebenen Symbolen erfolgen. Ebenso kann die Metainformation in einen Barcode, Strichcode und/oder QR-Code umgewandelt oder codiert werden.

In einem weiteren Schritt wird das Bild mit dem mindestens einen Codierblock von einer ersten Computer-Einheit zu einer zweiten Computer-Einheit übertragen. Insbesondere wird das Bild unter Verwendung eines vorgegebenen ersten Browsers der ersten Computer-Einheit zu einem vorgegebenen zweiten Browser der zweiten Computer-Einheit übertragen. Dabei kann bevorzugt das WebRTC-Verfahren eingesetzt werden. Es ist ebenfalls möglich, das Bild von einem Cloud-Server zur ersten oder zweiten Computer-Einheit zu übertragen. Insbesondere bei Streaming-Diensten oder Streaming-Angeboten kann das Bild oder ein Videosignal direkt von einem Cloud-Server zur ersten oder zweiten Computer-Einheit übertragen werden. Die erste oder zweite Computer-Einheit ist insbesondere ein Notebook, Desktop-PC und/oder ein Smartphone und stellt in der Regel stellt ein Endgerät dar, welche von einem Nutzer betrieben wird.

Für die Datenübertragung beziehungsweise die Übertragung des Bildes oder von Videosignalen können insbesondere Codierer und Decodierer zum Einsatz kommen. Der Codierer und Decodierer können im Zusammenhang mit dem Übertragen als Transformatoren betrachtet werden. Der Begriff "Übertragen" kann ein Transformieren oder mehrmaliges Transformieren der Bildinformation zum Übertragen des Bildes beinhalten oder umfassen. Das Bild oder die Bildinformation kann vor dem Übertragen transformiert werden. Das übertragende Bild kann nach dem Übertragen (zurück)transformiert werden. Dazu können die Transformatoren verwendet werden.

In einem weiteren Schritt wird die optische Information des übertragenen mindestens einen Codierblocks des Bildes zu der Metainformation decodiert. Das Decodieren kann insbesondere mithilfe der zweiten Computer-Einheit erfolgen. Der Begriff "Decodieren" kann ein Extrahieren, Ermitteln, Auswerten und/oder Analysieren bedeuten. Somit kann die optische Information aus dem übertragenen mindestens einen Codierblock des Bildes extrahiert oder ermittelt werden. Die optische Information kann zum Gewinnen der Metainformation ausgewertet und/oder analysiert werden. Das Decodieren kann insbesondere das Extrahieren der optischen Information aus dem mindestens einen Codierblock und das Auswerten der optischen Information zum Gewinnen der Metainformation umfassen. Dazu kann ein entsprechender Filter eingesetzt werden, welcher den mindestens einen Codierblock des Bildes erfasst und mithilfe des Decodierens aus diesem mindestens einen Codierblock die optische Information gewinnt.

Mit Hilfe dieses Verfahrens kann die Metainformation zusammen mit dem Bild in einem dafür vorgesehenen Bildkanal übertragen werden. Da bei WebRTC-Anwendungen der Videokanal mit dem Datenkanal empfängerseitig nicht synchronisiert werden kann, kann für eine weitere Applikation eine erwünschte oder erforderliche Synchronisation erfolgen, da nun die erforderliche Metainformation zusammen mit dem Bild übertragen wird. Dieses Verfahren eignet sich insbesondere für unmodifizierte (unveränderte) Standardwebbrowser. Solche Standardwebbrowser sind insbesondere Google Chrome, Opera, Firefox, Microsoft Edge und Safari. Die Metainformation kann direkt dem Bild angefügt werden und auf Empfängerseite ausgewertet und bei Bedarf sogar angezeigt werden. Dabei wird bevorzugt ein Bildinhalt des Bildes nicht verändert. In der Regel jedoch wird die Metainformation beim Empfänger nicht angezeigt, sondern für eine synchronisierte Darstellung der Zusatzinformation verwendet. Dabei können vorgegebene Standardtechniken ohne zusätzliche Plug-Ins zum Einsatz kommen. Die Datenrate der übertragenen Bilder steigt dabei nur marginal an und kann nahezu vernachlässigt werden.

Eine zusätzliche oder alternative Weiterbildung des Verfahrens sieht vor, dass die optische Information mittels mehrerer Grauwerte codiert wird. Dazu kann der mindestens eine Codierblock mit entsprechenden Grauwerten initialisiert werden. Dabei kann ein einzelner Codierblock einen Grauwert repräsentieren. Ebenso können einzelne Pixel oder Bildpunkte einen entsprechenden Grauwert repräsentieren. Der Grauwert kann insbesondere einen Ziffernwert eines jeweiligen Abschnitts eines Zeitstempels entsprechen. Anstelle des Begriffs "Zeitstempel" wird oft der Begriff "Timestamp" verwendet. Ein Zeitstempel kann beispielsweise 32 Bit lang sein. Dies trifft beispielsweise auf einen RTP-Timestamp zu. Dieser Zeitstempel kann in acht 4 Bit Gruppen unterteilt werden. Jede dieser Gruppe kann einen Wert zwischen 0 und 15 annehmen. Dieser Wert der jeweiligen Gruppe kann beispielsweise mit 16 multipliziert werden, um so den Grauwert des jeweiligen Blocks des mindestens einen Codierblocks zu erhalten. Werden bestimmte Blöcke von mehreren Codierblöcken nicht benötigt, so kann der Grauwert beispielsweise auf einen vorgegebenen Wert wie zum Beispiel 127 gesetzt werden.

Eine Anordnung oder Abfolge mehrerer Grauwerte kann somit die optische Information repräsentieren. Die Grauwerte stellen bevorzugt eine Intensität oder Helligkeit eines Codierblocks oder Bildpunktes (Pixel) dar.

Wird im Rahmen dieser Anmeldung von einem Codierblock gesprochen, so können ebenso mehrere Codierblöcke angesprochen sein. Dies bedeutet insbesondere, dass das Verfahren sowie dessen Weiterbildungen, die sich auf einen Codierblock beziehen, entsprechend auf mehrere Codierblöcke übertragen lassen. Das Bild wird um mindestens einen Codierblock erweitert, bevorzugt wird das Bild um mehrere Codierblöcke erweitert.

Eine zusätzliche oder alternative Ausführungsform sieht vor, dass beim Codieren der Metainformation der jeweilige Grauwert zu dem mindestens einen Codierblock mithilfe eines Schwellwert-Operators ermittelt wird. Das Ermitteln des jeweiligen Grauwerts erfolgt bevorzugt durch die zweite Computer-Einheit. Dies kann insbesondere innerhalb einer Browserumgebung erfolgen. Ein vorgegebener Browser der zweiten Computer-Einheit kann einen Helligkeits- oder Intensitätswert eines jeweiligen Bildpunktes oder Pixels erfassen. Mithilfe des Schwellwert-Operators kann ein Wert betreffend die Helligkeit oder Intensität des Pixels ermittelt werden, welcher mit vorgegebenen Schwellwerten verglichen werden kann. Mittels mehrerer Schwellwerte kann die jeweilige Helligkeit oder Intensität des Pixels festgestellt werden. Der Grauwert kann in der Bildverarbeitung insbesondere den Helligkeits- oder Intensitätswert eines einzelnen Bildpunktes oder Pixels darstellen. Im Fall eines RGB-Farbwertes kann der Grauwert mit folgender Formel ermittelt werden:

```
Grauwert = 0,299*Rotanteil+0,587*Grünanteil+0,114*Blauanteil.
[Formel 1]
```

Mit dieser Formel kann ein Wert ermittelt werden, der unabhängig von Farben die Helligkeit des Bildpunktes wiedergibt.

Eine zusätzliche oder alternative Weiterbildung des Verfahrens sieht vor, dass eine Zusatzinformation mit dem Bild synchronisiert wird, indem der Zusatzinformation die Metainformation zugeordnet wird und die Zusatzinformation zusammen mit dem Bild dargestellt wird. Die Zusatzinformation kann beispielsweise ein Overlay in Form eines rechteckigen Rahmens beinhalten. So kann beispielsweise ein Objekt wie ein Kraftfahrzeug oder Gesicht hervorgehoben werden. Das Overlay kann als Zusatz-Bild aufgefasst werden, welches über das Bild geschoben wird. Die Zusatzinformation in Form des Overlays kann beispielsweise ein Pfeil sein, der zusätzlich in dem Bild dargestellt werden soll.

Die Zusatzinformation kann darüber hinaus neben einem zusätzlichen Bild auch weitere Informationen zum Darstellen der Zusatzinformation zu diesem Bild enthalten. Diese weiteren Informationen zum Darstellen der Zusatzinformation können eine Anzeigefrequenz und/oder Anzeigedauer des zusätzlichen Bildes umfassen. So kann das zusätzliche Bild beispielsweise ein Pfeil sein und die weitere Darstellungsinformation kann eine Blinkfrequenz für den Pfeil enthalten. Die Zusatzinformation kann insbesondere bei mehreren Bildern des Videostroms zu genau einem dieser mehreren Bilder zugeordnet werden. Dies wird oft als frame-genaue Zuordnung bezeichnet. So kann beispielsweise das zusätzliche Bild genau einem Bild aus einer Serie von mehreren Bildern zugeordnet werden und dort entsprechend angezeigt werden. Ebenso ist es möglich, dass das zusätzliche Bild oder die zusätzliche Grafik einer Teilmenge der mehreren Bilder zugeordnet wird und das zusätzliche Bild nur bei dieser Teilmenge der mehreren Bilder angezeigt wird. So kann beispielsweise bei einer Bildfolge von 100 Bildern ein Pfeil beginnend von dem 20. Bild bis zum 40. Bild angezeigt werden. Das zusätzliche Bild kann beispielsweise ein rechteckiger Rahmen sein, womit ein Gesicht markiert werden kann. Dies kann insbesondere bei Überwachungsanwendungen sinnvoll sein.

Eine zusätzliche oder alternative Weiterbildung sieht vor, dass das Bild von der ersten Computer-Einheit mit Hilfe eines ersten vorgegebenen Browsers zur zweiten Computer-Einheit mit Hilfe eines zweiten vorgegebenen Browsers übertragen wird. Dies ist insbesondere bei WebRTC-Anwendungen der Fall. Dabei erfolgt in der Regel eine Übertragung eines Videosignals von dem ersten Browser der ersten Computer-Einheit zu dem zweiten Browser der zweiten Computer-Einheit. Die beiden Computer-Einheiten sind insbesondere unterschiedlich und räumlich voneinander getrennt. Die erforderlichen Schritte zum Durchführen des Verfahrens wie zum Beispiel das Erweitern des Bildes, das Übersetzen der Metainformation, das Übertragen des Bildes und das Decodieren der optischen Information oder der Grauwerte können im Browser mit Hilfe von JavaScript realisiert werden. Insbesondere ist es nicht nötig, ein zusätzliches Programm einzusetzen oder Einstellungen an der ersten oder zweiten Computer-Einheit vorzunehmen. So kann das zusätzliche Bild der Zusatzinformation synchronisiert in dem Videostrom angezeigt werden, ohne dabei eine Umprogrammierung des Browsers oder anderweitige komplexe Einstellungen an den Computer-Einheiten vornehmen zu müssen. Dies ist insbesondere für jene Benutzer interessant, welche über keine Administratorrechte über die jeweilige Computer-Einheit verfügen.

Eine zusätzliche oder alternative Weiterbildung des Verfahrens sieht vor, dass das Bild von einem Cloud-Server als erste Computer-Einheit zu der zweiten Computer-Einheit übertragen wird. In diesem Fall ist die erste Computer-Einheit nicht länger als Notebook oder Desktop-PC ausgebildet, sondern als ein Cloud-Server. Beispielsweise kann der Cloud-Server einen Streaming-Dienst wie zum Beispiel Netflix oder Amazon anbieten. Der Cloud-Server kann auch als firmeneigener Cloud-Dienst ausgebildet sein. Damit kann eine Vielzahl von Nutzern einen Videostrom von dem Cloud-Server empfangen und dabei kann die Zusatzinformation in dem Bild angezeigt werden, wobei die Zusatzinformation mit dem Bild synchronisiert ist. Die bisher genannten Vorteile und Beispiele gelten sinngemäß und analog für dieses Verfahren.

Eine zusätzliche oder alternative Weiterbildung des Verfahrens sieht vor, dass das Bild aus dem Videostrom gewonnen wird, der mehrere Bilder beinhaltet, und der Videostrom durch eine Kamera erzeugt wird. Im Fall des Cloud-Servers kann der Videostrom als digitale Information auf dem Cloud-Server beziehungsweise einer dazugehörigen Speichereinheit digital abgespeichert sein. Bei Überwachungsszenarien wie zum Beispiel einer Kameraüberwachung eines Flughafens durch die Polizei oder eine Überwachung von Patienten im Krankenhaus werden häufig Kameras eingesetzt, um einen vorgegebenen Bereich zu überwachen. Dies bedeutet, dass die mehreren Bilder beziehungsweise der Videostrom durch die Kamera erzeugt werden. In solchen Situationen ist es beispielsweise erwünscht, dass bestimmte Objekte markiert werden sollen. Dieses Markieren kann mit Hilfe des zusätzlichen Bildes als Teil der Zusatzinformation erfolgen. Das zusätzliche Bild kann ein Rahmen sein, welcher das bestimmte Objekt umschließt.

Beispielsweise kann die Zusatzinformation vorsehen, dass ein vorgegebenes Objekt in dem Bild markiert wird. Dazu kann zusätzlich eine Objekterkennung erfolgen. Insbesondere kann die Objekterkennung anhand des Bildes durchgeführt werden. Die Objekterkennung kann durch die erste oder die zweite Computer-Einheit durchgeführt werden. So kann zum Beispiel ein Cloud-Dienst verwendet werden, um die Objekterkennung in dem Bild auszuführen. Ergänzend oder alternativ kann die zweite Computer-Einheit die Objekterkennung ausführen. Somit kann die Zusatzinformation ein zusätzliches Bild und einen Objekttyp umfassen, der mit dem zusätzlichen Bild markiert werden soll. Wird der Objekttyp in dem Bild erkannt, so kann dieser Objekttyp entsprechend mit dem zusätzlichen Bild markiert werden. So kann beispielsweise vorgesehen sein, dass innerhalb in dem Bild Kraftfahrzeuge markiert werden sollen. Dies ist zum Beispiel in Fußgängerzonen denkbar. Dort sind Kraftfahrzeuge meistens nicht vorgesehen beziehungsweise nur eingeschränkt vorgesehen und ein Markieren der Kraftfahrzeuge in dem Videostrom kann bei einer Überwachung hilfreich sein.

Eine zusätzliche oder alternative Weiterbildung des Verfahrens sieht vor, dass das Bild unter Verwendung eines vorgegebenen Videocodecs und/oder einer Echtzeit-Kommunikationsplattform, insbesondere mittels WebRTC, übertragen wird. Beim Übertragen des Bildes oder der mehreren Bilder können blockbasierte Videocodecs wie zum Beispiel VP8, VP9, H264, H265, AV1 zum Einsatz kommen. Mit Hilfe solcher Videocodecs können Bilder oder digitale Videos codiert und decodiert werden. So können diese Videocodecs das Bild inklusive der angefügten Metainformation codieren und das Bild nach der Übertragung entsprechend wieder decodieren. Das Bild ist dabei insbesondere mit Hilfe des mindestens einen Codierblocks derart modifiziert, dass ein Inhalt des Bildes (Bildinhalt) beim Codieren und Decodieren unverändert bleibt. Dies kann dadurch gewährleistet werden, indem der mindestens eine Codierblock nicht in dem Bild eingefügt, sondern bevorzugt unmittelbar an dem Bild angefügt wird. Somit kann das Bild inklusive der Metainformation so in den Bildern codiert werden, dass die Zusatzinformation zusammen mit dem Bild den Encoder/Decoder-Prozess unbeschadet übersteht. Nach dem Übertragen des Bildes wird die Zeitinformation bevorzugt zurück in den Zahlenraum mit den ursprünglichen Wert zurücktransformiert.

Somit kann bei Verwendung von WebRTC ein Videosignal übertragen werden und dazu zugleich eine framegenaue Synchronisation der Zusatz-/Metainformation erreicht werden. Dies kann beispielsweise in "Remote Video-Monitoring-Anwendungen" mit Ein-/Überblendungen von Zusatz- oder Metainformationen erforderlich sein oder in verteilten Augmented-Reality- oder Virtual-Reality-Anwendungen. Bei Augmented-Reality- oder Virtual-Reality-Anwendungen verfügen die Clients häufig nicht über genügend 3D-Renderingleistung und greifen deshalb auf das Videosignal zurück.

Eine zusätzliche oder alternative Weiterbildung des Verfahrens sieht vor, dass beim Decodieren der Metainformation ausschließlich JavaScript eingesetzt wird. JavaScript ist insbesondere ein Scriptsprache, um eine Benutzerinteraktion auszuwerten, Inhalte zu verändern, nachzuladen oder zu generieren. JavaScript wird insbesondere bei Webbrowsern eingesetzt. JavaScript ist eine Standardprogrammiersprache, die in Webseiten integriert werden kann, um Funktionen wie Menüs, Klänge und andere interaktive Funktionen anzubieten. In der Regel ist JavaScript in den genannten Browsern aktiviert und erfordert keine zusätzliche Installation. Somit kann JavaScript als Programmiersprache betrachtet werden, die jeder vorgegebene Standardbrowser benutzen kann. Insbesondere verfügen unmodifizierte Standardbrowser über JavaScript. Solchen unmodifizierten Standardbrowsern fehlt die nötige Schnittstelle zum Synchronisieren der Zusatzinformation mit dem Bild. Diese Schnittstelle ist meist aus Sicherheitsgründen nicht vorgesehen, da dadurch der Browser für Hacker- oder Virenangriffe anfälliger werden würde. Mit der am Bild angefügten optischen Information kann mithilfe von JavaScript das Verfahren ohne zusätzliches Anpassen des Browsers oder jeweiligen Computer-Einheit durchgeführt werden. Ein normaler Standardbrowser reicht somit aus, um ein Videosignal zu übertragen und zugleich synchronisiert Zusatzinformationen einblenden zu können.

Eine zusätzliche oder alternative Weiterbildung des Verfahrens sieht vor, dass bei dem Erweitern des Bildes der mindestens eine Codierblock dem Bild unmittelbar links, rechts, oben oder unten angefügt wird. Dies trifft insbesondere für rechteckige Bilder zu. Der mindestens eine Codierblock wird idealerweise so angefügt, dass das Bild nach dem Übertragen leicht beschnitten werden kann. Beim Darstellen des übertragenen Bildes wird bevorzugt nur der Bereich des Bildes ohne den mindestens einen Codierblock dargestellt. Wird dazu der mindestens eine Codierblock dem Bild unmittelbar links, rechts, oben oder unten angefügt, so kann das Bild leicht ohne den mindestens einen Codierblock dargestellt werden.

Dieses Verfahren ließe sich auf runde oder dreieckige Bilder erweitern. In diesem Fall würde der mindestens eine Codierblock konzentrisch um das Bild herum oder um eine Dreiecksform des Bildes herum angefügt werden. Im Regelfall jedoch ist das Bild rechteckig ausgebildet und in diesem Fall wird der mindestens eine Codierblock bevorzugt links, rechts, oben oder unten angefügt.

Eine zusätzliche oder alternative Weiterbildung des Verfahrens sieht vor, dass das übertragene Bild durch die zweite Computer-Einheit ohne den mindestens einen Codierblock dargestellt wird. Die Darstellung des übertragenen Bildes kann sich somit lediglich auf das Bild in seiner Form vor dem Erweitern beziehen. Alternativ kann das übertragene Bild um den mindestens einen Codierblock beschnitten werden, sodass das Bild und der mindestens eine Codierblock getrennt werden. In beiden Fällen wird das übertragene Bild ohne den mindestens einen Codierblock dargestellt. So kann das ursprüngliche Bild ohne einen visuell störenden Codierblock bei der zweiten Computer-Einheit angezeigt werden.

Die Erfindung stellt ebenfalls eine Vorrichtung zum Übertragen einer Metainformation zu einem Bild eines Videostroms mit einem Prozessor bereit, wobei der Prozessor so konfiguriert ist, dass er das Verfahren nach einem der genannten Weiterbildungen ausführt. Der Prozessor kann als Steuereinheit verstanden werden und ein neuronales Netz aufweisen. Insbesondere kann die erste Computer-Einheit über einen ersten Prozessor verfügen und die zweite Computer-Einheit kann einen zweiten Prozessor aufweisen. Der Prozessor kann Steuerungssignale senden und empfangen. Der Prozessor kann mit den Steuersignalen das computerimplementierte Verfahren sowie die Weiterbildungen dazu ausführen. Insbesondere kann der Prozessor empfangene Signale analysieren und auswerten und daraus ein neues Steuersignal erzeugen. Der Prozessor kann insbesondere ein handelsüblicher Prozessor sein, der bei Desktop-PCs oder Notebooks zum Einsatz kommt.

Die Erfindung sieht ebenfalls ein Computerprogrammprodukt vor, welches Befehle umfasst, die bei einer Ausführung des Programms durch die erste Computer-Einheit und/oder durch die zweite Computer-Einheit die beiden Computer-Einheiten dazu veranlassen, das Verfahren oder eine Weiterbildung des Verfahrens auszuführen. Das Computerprogrammprodukt kann das Programm beziehungsweise ein Programmcode sein, welche das Verfahren oder eine Weiterbildung davon ausführen kann. Das Computerprogrammprodukt kann zusätzlich oder alternativ als computerlesbares Speichermedium ausgebildet sein. Das computerlesbare Speichermedium kann eine SD-Karte, USB-Stick, Festplatte, CD-ROM, DVD, Diskette, Cloud-Speicher etc. sein. Somit kann das Verfahren in Form eines Programmcodes auf dem computerlesbaren Speichermedium abgespeichert sein. Das computerlesbare Speichermedium kann digitale Informationen elektronisch, magnetisch und/oder optisch abspeichern. Das Computerprogrammprodukt kann das computerlesbare Speichermedium umfassen, welches Befehle beinhaltet, welche bei der Ausführung durch die erste und/oder zweite Computer-Einheit diese beiden Computer-Einheiten dazu veranlassen, das computerimplementierte Verfahren oder eine Weiterbildung davon auszuführen.

Die vorliegende Erfindung kann in Form eines Computerprogrammproduktes vorliegen, welches Programmmodule enthält, die von einem durch ein computerbenutzbares oder computerlesbares Medium zugänglich sind. Das computerlesbare Medium kann das Verfahren mittels eines Programmcodes realisieren, der durch einen oder mehreren Computer, Prozessoren oder Systeme zur Ausführung von Befehlen ausgeführt werden kann. Das computerbenutzbares oder computerlesbares Medium kann jedes Gerät sein, welches den Programmcode für die Benutzung durch einen entsprechenden Apparat oder ein entsprechendes Gerät enthalten, speichern, kommunizieren, verbreiten oder befördern kann.

Sowohl Prozessoren als auch Programmcodes können zum Implementieren jedes Aspekts des computerimplementierten Verfahrens zusammengefasst oder verteilt werden (oder eine Kombination davon), wie es dem Fachmann bekannt ist.

Während die vorliegende Erfindung im Einzelnen mit Bezug auf gewisse Ausführungsbeispiele beschrieben worden ist, soll diese nicht als auf diese bestimmten Ausführungsbeispiele beschränkt betrachtet werden. Angesichts der vorliegenden Offenbarung bieten sich dem Fachmann viele Modifikationen und Variationen, ohne über den Rahmen der verschiedenen Ausführungsbeispiele der vorliegenden Erfindung, wie hier beschrieben, hinauszugehen. Der Umfang der vorliegenden Erfindung ist daher durch die folgenden Ansprüche angezeigt und nicht durch die vorhergehende Beschreibung limitiert. Alle Änderungen, Abwandlungen und Variationen, die unter die Bedeutung und die Reichweite einer Gleichwertigkeit der Ansprüche fallen, sind als innerhalb ihres Umfangs liegend anzusehen. Alle in den Verfahrensansprüchen beanspruchten vorteilhaften Ausführungsbeispiele können auch für System- bzw. Vorrichtungsansprüche zutreffen.

Vorteile, Beispiele und Merkmale der Ausführungsformen können sinngemäß und analog auf das Verfahren übertragen werden. Ebenso können Verfahrensmerkmale als entsprechende Vorrichtungsmerkmale interpretiert werden. Somit können Merkmale, Vorteile und Beispiele des Verfahrens sinngemäß und analog auf die Ausführungsformen übertragen werden.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Durch diese Beschreibung erfolgt keine Beschränkung der Erfindung auf diese Ausführungsbeispiele. In verschiedenen Figuren sind gleiche Komponenten mit identischen Bezugszeichen versehen. Die Figuren sind in der Regel nicht maßstäblich.

Dabei zeigt:

FIG 1    eine schematische Darstellung eines Bilds mit einer optischen Information, welche übertragen wird;

FIG 2    eine schematische Darstellung einer Übertragung eines Videostroms von einem ersten Browser zu einem zweiten Browser; und

FIG 3    eine schematische Darstellung einer bevorzugten Variante eines Verfahrens.

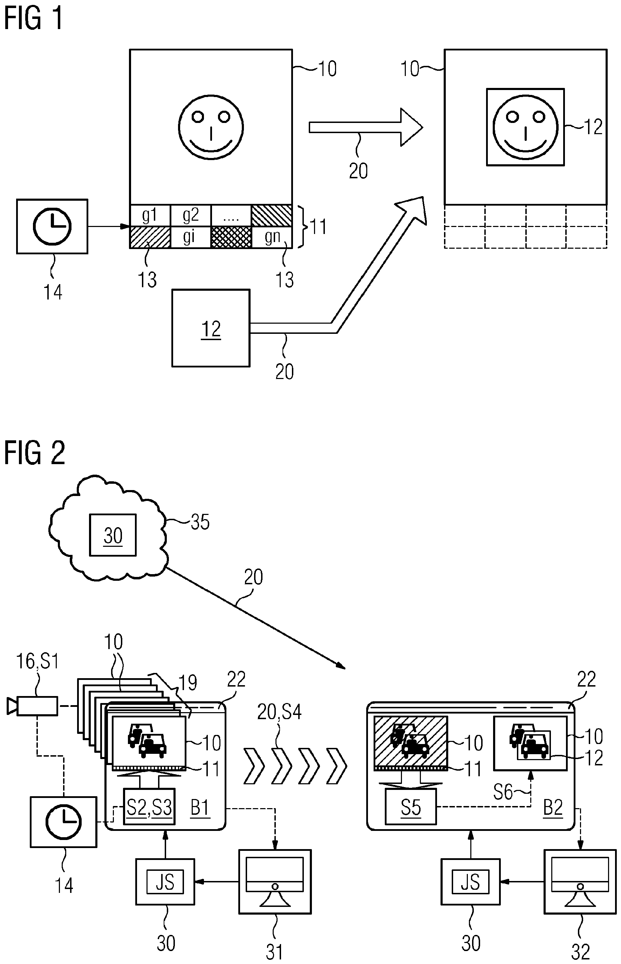

In FIG 1 ist auf der linken Seite ein Bild 10 gezeigt, welches ein Gesicht darstellt. Anstelle des Gesichts kann ein anderes Objekt dargestellt sein. Das Bild 10 kann beispielsweise von einer Kamera 16 erzeugt worden sein. Das Bild 10 soll von einer ersten Computer-Einheit 31 zu einer zweiten Computer-Einheit 32 übertragen werden. Dazu wird im Beispiel von FIG 1 eine Web-Echtzeitkommunikationsplattform 20 eingesetzt. Mit Hilfe einer solchen Plattform ist es zwar möglich, die Bildinformationen und eine Metainformation 14 zu übertragen, jedoch können diese Informationen auf der Empfängerseite, also bei der zweiten Computer-Einheit 32 nicht mehr miteinander kombiniert werden.

Bei den derzeitigen Echtzeit-Kommunikationsplattformen 20 insbesondere dem bekannten WebRTC-Verfahren 20 werden Videoströme 19 von einem ersten Browser B1 zu einem zweiten Browser B2 übertragen. Der erste Browser B1 ist dabei der ersten Computer-Einheit 31 der zweite Browser B2 der zweiten Computer-Einheit 32 zuzuordnen. Derzeit werden aus Sicherheitsgründen in dem Browser die jeweiligen Decoder abgeschlossen in einer Sandbox ausgeführt. Somit sieht das WebRTC-Verfahren 20 keine Schnittstelle vor, um empfängerseitig übertragene Metainformationen 14 zum Synchronisieren weiterer Zusatzinformationen zu nutzen.

Die Erfindung schlägt an dieser Stelle vor, die Metainformation 14 zu dem Bild 10 mit dem Bild 10 zu verbinden und die Metainformation 14 und das Bild 10 zusammen von dem ersten Browser B1 zu dem zweiten Browser B2 zu übertragen. Dazu wird das Bild 10 derart verändert, dass es eine optische Information 11 enthält.

Diese optische Information 11 könnte mit Hilfe steganografischer Methoden dargestellt werden. Dabei ist jedoch zu bedenken, dass diese steganografischen Methoden einen Encodierprozess und Decodierprozess überstehen müssen. Denkbar wäre auch eine sichtbare visuelle Einbettung der optischen Information 11 in das Bild 10. Dieser Prozess wird oft als Watermarking bezeichnet. Ebenso könnte prinzipiell ein Alpha-Kanal verwendet werden, wobei standardmäßige Videocodecs dieses Verfahren nicht oder nur unzureichend unterstützen. Unter https://github.com/phongcao/webrtc-metadata-example findet man einen Vorschlag, bei dem Metadaten über die RTP Header Extensions mit übertragen werden. Dieser Ansatz basiert aber darauf, eine spezielle Software-Komponente zu implementieren, die explizit im Browser als Plugin installiert werden muss, was diesen unter dem Gesichtspunkt der Verwendung eines Standard-Webbrowsers ausschließt. Mit Hilfe der steganografischen Methoden, der visuellen Einbettung, des Einsatzes eines Alpha-Kanals oder den RTP Header Extensions Ansatz kann die optische Information 11 nicht oder nur mit deutlichen Nachteilen übertragen werden.

Deshalb schlägt die Erfindung vor, das Bild 10 um mindestens einen Codierblock 13 zu erweitern. Im Beispiel von FIG 1 sind dem Bild 10 unmittelbar acht Codierblöcke 13 hinzugefügt oder angefügt worden. Die mehreren Codierblöcke 13 können in Form einer oder mehrerer Blockzeilen 13 angeordnet sein. In diesen Codierblöcken 13 soll eine Zeitinformation 14 als Metainformation 14 in codierter Form eingetragen werden. Dazu wird die Metainformation 14 in die optische Information 11 übersetzt, transformiert und/oder encodiert.

Im Beispiel von FIG 1 ist die Metainformation 14 als Zeitinformation 14 ausgebildet. Die optische Information 11 wird im Beispiel der FIG 1 mit Hilfe mehrerer Grauwerte gi dargestellt. Dabei kann jeder einzelne Codierblock 13 einen eigenen Grauwert gi aufweisen. Der Grauwert gi ist mit dem Index "i" gekennzeichnet. Der Index i kann Werte von 1 bis n annehmen. Der Index "n" gibt dabei die Anzahl der Grauwerte an beziehungsweise eine Nummer des letzten Grauwerts. So kann beispielsweise der erste Codierblock 13 einen ersten Grauwert g1 aufweisen und der achte Codierblock 13 einen (letzten) achten Grauwert g8. In diesem Fall gibt es genau 8 Grauwerte und n beträgt 8. Die Codierblöcke 13 werden bevorzugt dem Bild 10 unmittelbar unten angefügt. Somit repräsentieren die Codierblöcke 13 einen zusätzlichen Bereich. Die Abfolge dieser acht Grauwerte könnte zum Beispiel die Metainformation 14 in codierter Form darstellen.

Die Codierblöcke 13 sind somit nicht in dem Bild 10 enthalten. Die mehreren Codierblöcke 13 können alternativ links oder rechts sowie oben an dem Bild 10 angeordnet werden. Bevorzugt werden die Codierblöcke 13 unmittelbar an dem Bild 10 angeordnet. Neben dem Bild 10 wird zusätzlich eine Zusatzinformation 12 mit Hilfe des WebRTC-Verfahrens 20 zur zweiten Computer-Einheit 32 übertragen. Das Bild 10 zusammen mit der optischen Information 11 kann als ein Datensatz betrachtet werden, der das Bild 10 und die Metainformation 14 enthält. Somit wird mit dem Bild 10 zugleich die Metainformation 14 übertragen, welche in den Codierblöcken 13 in codierter Form enthalten ist. Die Übertragung dieses Datensatzes aus dem Bild 10 und den Codierblöcken 13 erfolgt dabei bevorzugt von dem ersten Browser B1 zu dem zweiten Browser B2.

In bestimmten Anwendungsfällen ist es erwünscht, die Zusatzinformation 12 in dem Bild 10 darzustellen. Bei einem einzigen Bild 10 mag dies noch sehr einfach sein, jedoch gelingt dies bei einer Mehrzahl von Bildern 10 nicht mehr so ohne weiteres. Wird beispielsweise ein Videostrom 19 mit mehreren Bildern 10 übertragen, so stellt sich die Herausforderung, die Zusatzinformation 12 mit den Bildern 10 zu synchronisieren beziehungsweise die Zusatzinformation 12 in den vorhergesehenen Bildern 10 dazustellen. Dazu ist eine Synchronisation der Zusatzinformation 12 mit den Bildern 10 notwendig. Da derzeit kein Standardbrowser eine Schnittstelle bereitstellt, welche diese Synchronisation ermöglicht, wird die Zeitinformation 14 zusammen mit dem Bild 10 übertragen und kann so zum Synchronisieren und zum Darstellen der Zusatzinformation 12 genutzt werden. Bevorzugt wird zusammen mit jedem Bild 10 die dazugehörige Zeitinformation 14 übertragen, die jedem Bild 10 angefügt ist. So kann der zweite Browser B2 mit Hilfe einer Standardprogrammiersprache, welche meist in Form von JavaScript JS vorliegt, die Zusatzinformation 12 mit dem Bild 10 synchronisieren.

Die Zusatzinformation 12 kann darüber hinaus eine Anweisung enthalten, dass ein vorgegebenes Objekt oder ein vorgegebener Objekttyp markiert werden soll. Im Beispiel von FIG 1 ist vorgesehen, dass ein Gesicht mit Hilfe eines rechteckigen Rahmens 12 markiert werden soll. Dieser Rahmen wird oft auch als Overlay bezeichnet. Das Erweitern des Bildes 10 um die Codierblöcke 13, das Codieren der Zeitinformation 14, das Decodieren des Bildes 10 mit den Codierblöcken 13 kann mit Hilfe eines Prozessors 30 durchgeführt werden.

Durch das Anfügen der Codierblöcke 13 an das Bild 10 kann die Zeitinformation 14 zusammen mit dem Bild 10 übertragen werden. Damit gelingt es innerhalb der Browserumgebung der zweiten Computer-Einheit 32 auf die Zusatzinformation 12 zuzugreifen und die Zusatzinformation 12 mit dem Bild 10 zu synchronisieren. Als Browser kommen bevorzugt unmodifizierte Standardbrowser in Betracht. Solche sind beispielsweise Firefox, Opera, Safari und Edge.

FIG 2 zeigt eine ähnliche Situation wie FIG 1. Im Beispiel von FIG 2 werden mehrere Bilder 10 in Form eines Videosignals (Videostrom 19) von dem ersten Browser B1 zu dem zweiten Browser B2 übertragen. Der erste Browser B1 ist als Fenster dargestellt, welches eine Browserzeile 22 enthält. Dasselbe gilt für den zweiten Browser B2. Das Verfahren kommt bevorzugt zum Einsatz, wenn mehrere Bilder 10 in Form des Videostroms 19 übertragen werden. Der Videostrom 19 kann mit Hilfe der Kamera 16 generiert oder erzeugt werden. Die Kamera 16 erzeugt in der Regel neben den mehreren Bildern 10 zugleich zu jedem Bild 10 die dazugehörige Metainformation 14. In diesem Fall ist die Metainformation 14 als Zeitinformation 14 ausgebildet. Die Metainformation 14 kann darüber hinaus noch weitere Informationen beinhalten. Solche Informationen wären zum Beispiel eine Gerätenummer oder ein Namen eines Autors.

Die Zeitinformation 14 wird mit Hilfe des Prozessors 30 in die optische Information 11 übersetzt. Mit Hilfe des Prozessors 30 erfolgt ein Codieren der Zeitinformation 14. Als Resultat wird das Bild 10 um die optische Information 11 erweitert. Im Beispiel von FIG 2 ist nur eine Blockzeile zu erkennen, während in FIG 1 zwei Blockzeilen dargestellt sind. Das um die optische Information 11 erweiterte Bild 10 kann mit Hilfe der ersten Computer-Einheit 31 optisch dargestellt werden. Alternativ dazu kann der Videostrom 19 von einem Cloud-Server 35 bezogen werden. Dieser Cloud-Server 35 kann ebenfalls einen eigenen Prozessor 30 aufweisen. Der Videostrom 19 kann mit Hilfe des WebRTC-Verfahrens 20 von der ersten Computer-Einheit 31 zur zweiten Computer-Einheit 32 übertragen werden. Die Übertragung erfolgt dabei bevorzugt vom ersten Browser B1 zum zweiten Browser B2, wobei die beiden Browser jeweils auf der entsprechenden Computer-Einheit 31, 32 ausgeführt werden. Alternativ können die mehreren Bilder 10 beziehungsweise der Videostrom 19 von dem Cloud-Server 35 mit Hilfe des WebRTC-Verfahrens 20 zur zweiten Computer-Einheit 32 übertragen werden. In diesem Fall ist die erste Computer-Einheit 31 als Cloud-Server 35 ausgebildet.

Das Codieren der optischen Information 11 erfolgt dabei bevorzugt mit Hilfe der mehreren Grauwerte gi. Nach der Übertragung und nach dem Decodieren wird bei der zweiten Computer-Einheit 32 innerhalb der Laufzeitumgebung des zweiten Browsers B2 mit Hilfe von JavaScript JS anhand der Codierblöcke 13 die Zusatzinformation 14 zur weiteren Verwendung wiederhergestellt. Somit kann durch die zweite Computer-Einheit 32 ein Decodierprozess 17 ausgeführt werden, welcher aus der optischen Information 11 beziehungsweise aus den mehreren Grauwerten Gi die Zeit- oder Metainformation 14 zurückgewinnt. Damit wurde zusammen mit dem Bild 10 zugleich die Zeitinformation 14 zusammen mit dem Bild 10 übertragen. Anhand der übertragenen Zeitinformation 14 kann das Darstellen der Zusatzinformation 12 bildgenau oder frame-genau ermöglicht werden. Mit Hilfe der decodierten Zeitinformation kann ermittelt werden, zu welchem Bild oder mehreren Bildern 10 die Zusatzinformation 12 zuzuordnen ist.

Im Beispiel von FIG 2 soll ein vorderes Kraftfahrzeug mittels eines rechteckigen Rahmens markiert werden. So kann die Zusatzinformation 12 als Anweisung beinhalten, dass im Falle mehrerer sichtbarer Kraftfahrzeuge das jeweils vordere Kraftfahrzeug durch ein zusätzliches Bild in Form eines Rahmens als die Zusatzinformation 12 markiert wird. Das Bild 10 wird bevorzugt ohne die Codierblöcke 13 dargestellt. Auf diese Weise kann das zusätzliche Bild 12 der Zusatzinformation 12 synchronisiert beziehungsweise frame-genau dargestellt werden. Dieses synchronisierte Darstellen erfordert keine Umprogrammierung des zweiten Browsers B2. Somit kann ein nichtmodifizierter Standardwebbrowser ohne weitere Plug-Ins zum Synchronisieren der Zusatzinformation 12 (hier der rechteckige Rahmen in FIG 1, der das Gesicht markiert) mit dem Bild 10 verwendet werden.

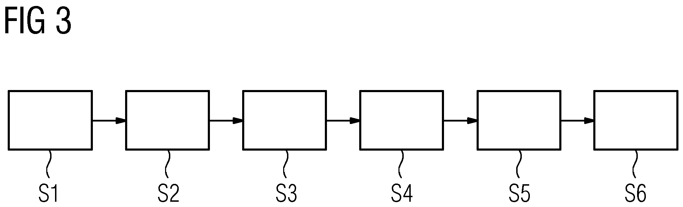

FIG 3 zeigt beispielhaft mehrere Verfahrensschritte für ein mögliches Verfahren. In einem ersten Schritt S1 wird mit der Kamera 16 der Videostrom 19 generiert. Der Videostrom 19 beinhaltet die mehreren Bilder 10. Dabei erzeugt die Kamera 16 bevorzugt für jedes der mehreren Bilder 10 eine separate Metainformation 14.

In einem zweiten Schritt S2 wird das Bild 10 oder die mehreren Bilder 10 jeweils um mindestens einen Codierblock 13 mit mehreren Pixeln zum optischen Darstellen der Metainformation 14 erweitert. Die Metainformation 14 wird somit in die optische Information 11 umgewandelt. Die optische Information 11 wird bevorzugt direkt an dem Bild 10 angeordnet. Das ursprüngliche Bild 10 beziehungsweise ein ursprünglicher Bildinhalt des Bildes 10 bleibt dabei bevorzugt unverändert. Beispielsweise können mehrere Codierblöcke 13 unmittelbar unter dem Bild 10 angeordnet werden.

In einem dritten Schritt S3 erfolgt ein Übersetzen oder Transformieren der Metainformation 14 in die optische Information 11 des mindestens einen Codierblocks 13. Dies erfolgt bevorzugt mit Hilfe eines Anpassens mehrerer Grauwerte gi betreffend die einzelnen Codierblöcke 13. Ebenso können einzelne Grauwerte gi zu jeweiligen Pixel innerhalb eines Codierblocks 13 modifiziert werden.

In einem vierten Schritt S4 wird das Bild 10 oder der Videostrom 19 zusammen mit den Codierblöcken 13 übertragen. Der Videostrom 19 wird dabei von der ersten Computer-Einheit 31 zur zweiten Computer-Einheit 32 übertragen. Insbesondere erfolgt die Übertragung der Bilder 10 oder des Videostroms 19 von dem ersten Browser B1 der ersten Computer-Einheit 31 zu dem zweiten Browser B2 der zweiten Computer-Einheit 32.

In einem fünften Schritt S5 erfolgt ein Decodieren der optischen Information 11 des übertragenen mindestens einen Codierblocks 13 des Bildes 10. Im fünften Schritt S5 können zu jedem Bild 10 des Videostroms 19 die jeweiligen optischen Informationen 11 der übertragenen Codierblöcke 13 decodiert werden. Dies geschieht bevorzugt innerhalb einer Browserumgebung der zweiten Computer-Einheit 32. Das Übertragen des Bildes 10 erfolgt dabei bevorzugt mit Hilfe einer Echtzeit-Kommunikationsplattform 20, insbesondere durch das WebRTC-Verfahren 20. Zugleich kann über dieses Verfahren die Zusatzinformation 12 übertragen werden. Die Zusatzinformation 12 kann mit Hilfe der decodierten optischen Information 11 mit den Bildern 10 synchronisiert werden.

In einem sechsten Schritt S6 wird die Zusatzinformation 12 der Metainformation 14 zugeordnet und die Zusatzinformation 12 wird zusammen mit dem Bild 10 dargestellt. Dieser Vorgang kann für mehrere Bilder 10 erfolgen. Bevorzugt werden die Bilder in dem zweiten Browser B2 angezeigt.

Insgesamt zeigt die Erfindung, dass mit Hilfe des WebRTC-Verfahrens 20 der Videostrom 19 übertragen werden kann und zugleich die Zusatzinformation 12 synchronisiert dargestellt werden kann. Dazu können gewöhnliche Standardwebbrowser ohne weitere Plug-Ins verwendet werden. Auf diese Weise kann die Web-Echtzeitkommunikation 20 mittels des WebRTC-Standards 20 zum Darstellen zeitsynchronisierter Zusatzinformationen verwendet werden. Das vorgeschlagene Verfahren bietet somit eine Möglichkeit, das WebRTC-Verfahren 20 um eine Funktionalität zu erweitern, ohne dabei Änderungen am Browser B1, B2 oder eine Umprogrammierung vornehmen zu müssen.

Wo noch nicht explizit geschehen, jedoch sinnvoll und im Sinne der Erfindung, können einzelne Ausführungsbeispiele, einzelne ihrer Teilaspekte oder Merkmale mit einander kombiniert bzw. ausgetauscht werden, ohne den Rahmen der hiesigen Erfindung zu verlassen. Mit Bezug zu einem Ausführungsbeispiel beschriebene Vorteile der Erfindung treffen ohne explizite Nennung, wo übertragbar, auch auf andere Ausführungsbeispiele zu.

Hierbei kann das Erweitern des Bildes 10, Übersetzen der Metainformation 14 in die optische Information 11 des Codierblocks 13, das Übertragen des Bildes 10 mit dem Codierblock 13 und das Decodieren der optischen Information 11 des übertragenen Codierblocks 13 insbesondere mittels des Prozessors 30 ausgeführt werden, insbesondere mittels einer Recheneinheit der ersten Computer-Einheit 31 und/oder der zweiten Computer-Einheit 32 ausgeführt werden.

**Patentansprüche**

1. Computerimplementiertes Verfahren zum Übertragen einer Metainformation (14) zu einem Bild (10) eines Videostroms (19) **gekennzeichnet durch** die Verfahrensschritte:

   - Erweitern des Bildes (10) um mindestens einen Codierblock (13) mit mehreren Pixeln zum optischen Darstellen der Metainformation (14)
   - Übersetzen der Metainformation (14) in eine optische Information (11) des mindestens einen Codierblocks (13),
   - Übertragen des Bildes (10) mit dem mindestens einen Codierblock (13) von einer ersten Computer-Einheit (31) zu einer zweiten Computer-Einheit (32),
   - Decodieren der optischen Information (11) des übertragenen mindestens einen Codierblocks (13) des Bildes (10) mittels der zweiten Computer-Einheit (32) zu der Metainformation (14) .

2. Verfahren nach Anspruch 1, wobei die optische Information (11) mittels mehrerer Grauwerte (gi) codiert wird.

3. Verfahren nach Anspruch 2, wobei zum Decodieren der Metainformation (14) der jeweilige Grauwert (gi) zu dem mindestens einen Codierblock (13) mithilfe eines Schwellwert-Operators ermittelt wird.

4. Verfahren nach einem der vorhergehenden Ansprüche, wobei eine Zusatzinformation (12) mit dem Bild (10) synchronisiert wird, indem der Zusatzinformation (12) die Metainformation (14) zugeordnet wird und die Zusatzinformation (12) zusammen mit dem Bild (10) dargestellt wird.

5. Verfahren nach einem der vorhergehenden Ansprüche, wobei das Bild (10) von der ersten Computer-Einheit (31) mithilfe eines ersten vorgegebenen Browsers (B1) zur zweiten Computer-Einheit (32) mithilfe eines zweiten vorgegebenen Browsers (B2) übertragen wird.

6. Verfahren nach einem der Ansprüche 1 bis 4, wobei das Bild (10) von einem Cloud-Server (35) als erste Computer-Einheit (31) zu der zweiten Computer-Einheit (32) übertragen wird.

7. Verfahren nach einem der vorhergehenden Ansprüche, wobei das Bild (10) aus dem Videostrom (19) gewonnen wird, der mehrere Bilder (10) beinhaltet, und der Videostrom (19) durch eine Kamera (16) erzeugt wird.

8. Verfahren nach einem der vorhergehenden Ansprüche, wobei das Bild (10) unter Verwendung eines vorgegebenen Videocodecs und/oder einer Echtzeit-Kommunikationsplattform (20), insbesondere mittels WebRTC (20), übertragen wird.

9. Verfahren nach einem der vorhergehenden Ansprüche, wobei beim Decodieren der Metainformation (14) ausschließlich JavaScript (JS) eingesetzt wird.

10. Verfahren nach einem der vorhergehenden Ansprüche, wobei beim Erweitern des Bildes (10) der mindestens eine Codierblock (13) dem Bild (10) unmittelbar links, rechts, oben oder unten angefügt wird.

11. Verfahren nach einem der vorhergehen Ansprüche, wobei das übertragene Bild (10) durch die zweite Computer-Einheit (32) ohne den mindestens einen Codierblock (13) dargestellt wird.

12. Vorrichtung zum Übertragen einer Metainformation (14) zu einem Bild (10) eines Videostroms (19) mit einem Prozessor (30), der so konfiguriert ist, dass er das Verfahren nach einem Ansprüche 1 bis 11 ausführt.

13. Computerprogrammprodukt umfassend Befehle, die bei der Ausführung des Programms durch die erste Computer-Einheit (31) und/oder und die zweite Computer-Einheit (32) diese veranlassen, das Verfahren nach einem der Ansprüche 1 bis 11 auszuführen.

# FIG 1

# FIG 2

FIG 3

```
┌──────┐    ┌──────┐    ┌──────┐    ┌──────┐    ┌──────┐    ┌──────┐
│      │ →  │      │ →  │      │ →  │      │ →  │      │ →  │      │
└──────┘    └──────┘    └──────┘    └──────┘    └──────┘    └──────┘
   S1          S2          S3          S4          S5          S6
```

**Europäisches Patentamt**
**European Patent Office**
**Office européen des brevets**

## EUROPÄISCHER RECHERCHENBERICHT

Nummer der Anmeldung

EP 19 19 1696

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2012/307882 A1 (BALLOCCA GIOVANNI [IT] ET AL) 6. Dezember 2012 (2012-12-06) | 1,2,5-13 | INV. H04N7/00 |
| Y | * Zusammenfassung * <br> * Absatz [0017] - Absatz [0020] * <br> * Absatz [0038] - Absatz [0040] * <br> * Absatz [0051] * <br> * Absatz [0067] - Absatz [0071] * <br> ----- | 3,4 | H04N21/81 <br> H04N21/84 <br> H04N21/8547 <br> H04N21/236 <br> H04N21/434 <br> H04N7/025 |
| Y | US 2013/014198 A1 (RAPINAT ANNE [FR] ET AL) 10. Januar 2013 (2013-01-10) | 4 | |
| A | * Zusammenfassung * <br> * Absatz [0008] - Absatz [0021] * <br> * Absatz [0048] * <br> ----- | 1,12,13 | |
| Y | US 2017/318358 A1 (EYER MARK [US]) 2. November 2017 (2017-11-02) | 3 | |
| A | * Zusammenfassung * <br> * Absatz [0002] - Absatz [0003] * <br> * Absatz [0006] - Absatz [0009] * <br> * Absatz [0012] * <br> * Absatz [0038] - Absatz [0042] * <br> ----- | 1,2,12, 13 | |

**RECHERCHIERTE SACHGEBIETE (IPC)**

H04N

Der vorliegende Recherchenbericht wurde für alle Patentansprüche erstellt

| Recherchenort | Abschlußdatum der Recherche | Prüfer |
|---|---|---|
| Den Haag | 13. Dezember 2019 | Dockhorn, Hans |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

    ...................................................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 19 19 1696

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-12-2019

| Im Recherchenbericht angeführtes Patentdokument | Datum der Veröffentlichung | Mitglied(er) der Patentfamilie | Datum der Veröffentlichung |
|---|---|---|---|
| US 2012307882 A1 | 06-12-2012 | CN 102934452 A | 13-02-2013 |
| | | EP 2526689 A1 | 28-11-2012 |
| | | ES 2556364 T3 | 15-01-2016 |
| | | IT 1397789 B1 | 24-01-2013 |
| | | JP 2013518458 A | 20-05-2013 |
| | | KR 20120127605 A | 22-11-2012 |
| | | US 2012307882 A1 | 06-12-2012 |
| | | WO 2011089556 A1 | 28-07-2011 |
| US 2013014198 A1 | 10-01-2013 | CN 102804764 A | 28-11-2012 |
| | | EP 2550805 A1 | 30-01-2013 |
| | | FR 2957742 A1 | 23-09-2011 |
| | | US 2013014198 A1 | 10-01-2013 |
| | | WO 2011117496 A1 | 29-09-2011 |
| US 2017318358 A1 | 02-11-2017 | CA 2978332 A1 | 13-10-2016 |
| | | DE 112016001646 T5 | 11-01-2018 |
| | | KR 20170134323 A | 06-12-2017 |
| | | US 2016301987 A1 | 13-10-2016 |
| | | US 2017318358 A1 | 02-11-2017 |
| | | US 2019297391 A1 | 26-09-2019 |
| | | WO 2016164430 A1 | 13-10-2016 |

EPO FORM P0461

Für nähere Einzelheiten zu diesem Anhang : siehe Amtsblatt des Europäischen Patentamts, Nr.12/82